# EUROPEAN PATENT APPLICATION

(11) **EP 1 422 659 A1**
(43) Date of publication of application: **26.05.2004**
(21) Application number: 03727992.4
(22) Date of filing: 25.04.2003
(51) Int. Cl.: G06T 1/20, G09G 5/00, G06F 3/153

(54) **IMAGE PROCESSING DEVICE**

(30) Priority: 25.04.2002 JP 2002123768; 23.04.2003 JP 2003118046
(71) Applicant: MATSUSHITA ELECTRIC INDUSTRIAL CO., LTD., Kadoma-shi, Osaka 571-8501 (JP)
(72) Inventor: KAYADA, Tadashi, Yokohama-shi, Kanagawa 236-0042 (JP)
(74) Representative: Grünecker, Kinkeldey, Stockmair & Schwanhäusser Anwaltssozietät
(86) International application number: PCT/JP2003/005328
(87) International publication number: WO 2003/091947

(57) **Abstract**

An image processing apparatus that prevents data traffic from expanding and expands the function without changing existing peripheral devices. An image generated by a DSP (110) is output to a liquid crystal interface (130) and an image generated by an image processor (400) is output to a liquid crystal interface (410). Then, an MPU (100) controls an image output switching section (150) and the image output switching section (150) controls a gate (140) and a gate (420) and a synchronizing signal and an image generated by the DSP(110) or image processor (400) are output to a driver (600) of a liquid crystal module. Then, the driver (600) drives a liquid crystal panel (610) and the image is displayed on the liquid crystal panel (610).

## Description

### Technical Field

The present invention relates to an image processing apparatus.

### Background Art

In recent years, images used for a communication terminal apparatus represented by a cellular phone have been evolving from monochrome images to color images, from a small screen to a large screen or from still images to moving images and in this way the volume of image data is increasing.

Conventionally, a communication terminal apparatus adopts a method of using an MPU (Micro Processor Unit) which controls the entire apparatus and incorporates an image display interface and image input interface, directly connecting these interfaces to, for example, an image display device such as a liquid crystal panel and an image pickup apparatus such as a camera and transferring the image from the MPU to the image display device. Furthermore, image processing carried out by the communication terminal apparatus is becoming more complicated and sophisticated year after year such as a TV telephone using moving images and three-dimensional graphic processing. Furthermore, a terminal incorporating a plurality of cameras or a terminal incorporating a plurality of liquid crystal panels, etc. , is currently on the market.

In response to these trends, a method of incorporating a subprocessor which is dedicated to image processing is being generally used in addition to a general-purpose main processor. An example of this is disclosed in "A MPEG4 Programmable Codec DSP with an Embedded Pre/Post-processing Engine (IEEE 1999 Custom Integrated Circuits Conference)."

However, incorporating a subprocessor involves a problem that a traffic path for image data inside the communication terminal apparatus becomes more complicated and data traffic in a main bus, etc., increases.

Furthermore, incorporating the subprocessor requires software for controlling the subprocessor or existing peripheral devices such as a camera and liquid crystal panel need to be drastically changed. Furthermore, incorporating the subprocessor even requires the configuration of the main processor to be changed. Therefore, when subprocessors dedicated to various types of processing are additionally introduced, the problem is that even the main processor must be changed every time.

### Disclosure of Invention

It is an object of the present invention to suppress an increase of data traffic and expand functions without changing existing peripheral devices.

A subject of the present invention is to switch, when a plurality of cameras, liquid crystal panels and processors are provided, between their respective inputs/outputs so as to prevent data traffic from passing through redundant paths.

According to one mode of the present invention, an image processing apparatus comprises a first processing section that generates and processes a display image using image data, a second processing section that generates and processes a display image which is different from that of the first processing section and a switching section that switches between the processing results obtained by the first processing section and second processing section and outputs the processing result.

According to another mode of the present invention, a communication terminal apparatus comprises the above described image processing apparatus.

### Brief Description of Drawings

FIG.1 is a block diagram showing a configuration of an image processing apparatus according to Embodiment 1 of the present invention;
FIG.2 is a block diagram showing a configuration of an image processing apparatus according to Embodiment 2 of the present invention;
FIG.3 is a block diagram showing a configuration of an image processing apparatus according to Embodiment 3 of the present invention;
FIG.4 is a block diagram showing a configuration of an image processing apparatus according to Embodiment 4 of the present invention;
FIG.5 is a block diagram showing a configuration of an image processing apparatus according to Embodiment 5 of the present invention;
FIG.6 is a block diagram showing a configuration of an image processing apparatus according to Embodiment 6 of the present invention;
FIG.7 is a block diagram showing a configuration of an image processing apparatus according to Embodiment 7 of the present invention; and
FIG.8 is a block diagram showing a configuration of an image processing apparatus according to Embodiment 8 of the present invention.

### Best Mode for Carrying out the Invention

With reference now to the attached drawings, embodiments of the present invention will be explained in detail below.

### (Embodiment 1)

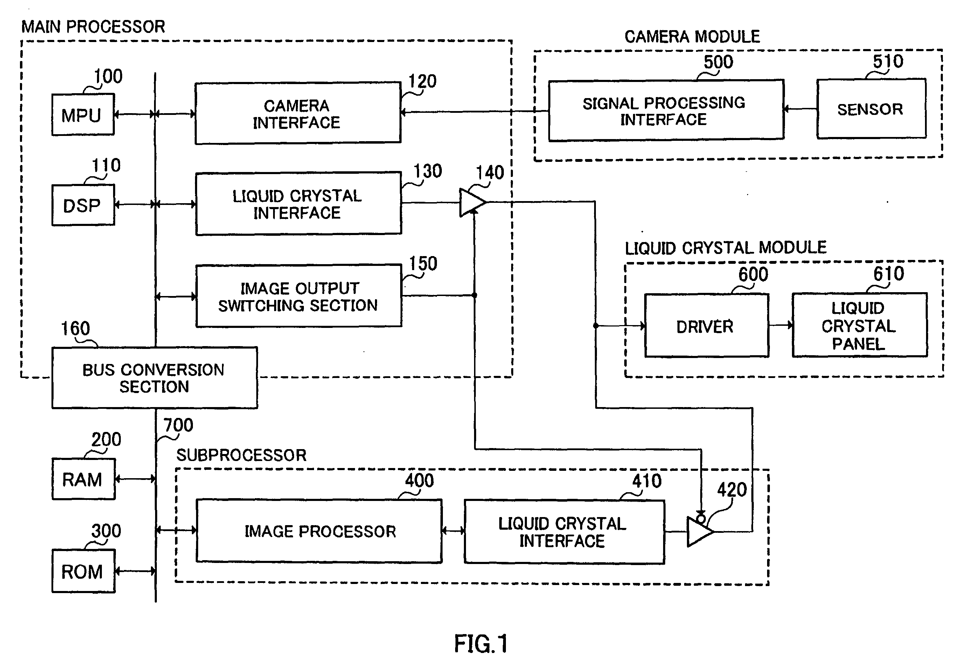

FIG.1 is a block diagram showing a configuration of an image processing apparatus according to Embodiment 1 of the present invention. The image processing apparatus shown in the same figure comprises a camera module, a liquid crystal module, a main processor, a subprocessor, a RAM (Random Access Memory) 200 and a ROM (Read Only Memory) 300 and the main processor, subprocessor, RAM 200 and ROM 300 are connected through a main bus 700.

The main processor comprises an MPU (Micro Processor Unit) 100, a DSP (Digital Signal Processor) 110, a camera interface 120, a liquid crystal interface 130, a gate 140, an image output switching section 150 and a bus conversion section 160. The subprocessor comprises an image processor 400, a liquid crystal interface 410 and a gate 420. The camera module comprises a signal processing interface 500 and a sensor 510. The liquid crystal module comprises a driver 600 and a liquid crystal panel 610.

The MPU 100 performs control of any processing other than image creation or image processing. The DSP 110 performs signal processing such as image processing. The camera interface 120 incorporates'the image data acquired by the camera module into the main processor. The liquid crystal interface 130 outputs a synchronizing signal for displaying the image on the liquid crystal panel 610 and an image processed by the DSP 110 to the liquid crystal module. The gate 140 outputs the image from the liquid crystal interface 130 under the control of the image output switching section 150. Furthermore, the gate 140 prevents the image output from the gate 420 of the subprocessor from being input to the liquid crystal interface 130 of the main processor. The image output switching section 150 controls the gate 140 and gate 420 to switch between images to be output to the liquid crystal module. In this way, adopting a configuration provided with a gate (gate 140) for outputting a signal from the interface (liquid crystal interface 130) in the main processor in only one direction and provided with the switching section (image output switching section 150) for switching with an external gate facilitates an addition of a subprocessor also having an interface (liquid crystal interface 410) and a gate (gate 420).

The bus conversion section 160 connects the main processor, RAM 200, ROM 300 and the main bus 700 to which the subprocessor is connected. The RAM 200 and ROM 300 store commands of the subprocessor and calculation data, etc.

The image processor 400 carries out moving image processing with high processing load. The liquid crystal interface 410 outputs a synchronizing signal and the image processed by the image processor 400 to the liquid crystal module. The gate 420 outputs the image from the liquid crystal interface 410 under the control of the image output switching section 150. Furthermore, the gate 420 prevents the image output from the gate 140 of the main processor frombeing input to the liquid crystal interface 410 of the subprocessor. Here, the output image of the liquid crystal interface 130 of the main processor and the output image of the liquid crystal interface 410 of the subprocessor are wired-ORed and input to the liquid crystal module. The images wired-ORed and input to the liquid crystal module are switched by the image output switching section 150.

The signal processing interface 500 outputs image data such as YUV (Y-signal U-signal V-signal) data obtained by the sensor 510 to the camera interface 120 of the main processor. The sensor 510 acquires image data. The driver 600 drives the liquid crystal panel 610. The liquid crystal panel 610 displays images output from the gate 140 or gate 420.

Then, the operation of the image processing apparatus in the above described configuration will be explained.

First, the sensor 510 acquires image data. This image data may be a still image or a moving image. Then, the image data obtained is output to the camera interface 120 of the main processor through the signal processing interface 500. When the image data is a still image or low resolution moving image, the load of image processing is relatively low, and therefore the image data is processed by the DSP 110 of the main processor and a desired image such as RGB (RedGreenBlue) image, etc., is generated. On the other hand, when the image data is a high resolution moving image, it needs to be subjected to a high-speed calculation and the load of image processing is high, and therefore the image data is output to the image processor 400 of the subprocessor through the main bus 700, processed and a desired image is generated.

When the image data is a still image or a low resolution moving image, the image generated by the DSP 110 is output to the liquid crystal interface 130. On the other hand, when the image data is a high resolution moving image, the image generated by the image processor 400 is output to the liquid crystal interface 410. Then, the MPU 100 controls the image output switching section 150 and the image output switching section 150 controls the gate 140 and gate 420, and the synchronizing signal and the image generated by the DSP 110 or image processor 400 are output to the driver 600 of the liquid crystal module. The switching between the output images by this image output switching section 150 is carried out by a tri-state operation. At this time, the gate 140 and gate 420 mutually prevent the image output from the other gate from being input to the liquid crystal interface 130 or liquid crystal interface 410 of the corresponding processor, and therefore the images are only input to the driver 600. The driver 600 drives the liquid crystal panel 610 and the image is displayed on the liquid crystal panel 610.

This embodiment provides a subprocessor and an image generated by the image processor 400 of the subprocessor is output directly from the liquid crystal interface 410 of the subprocessor to the liquid crystal module not through the liquid crystal interface 130 of the main processor, and therefore the image generated does not increase traffic of the main bus 700.

Furthermore, since image output paths to the mutually independent liquid crystal modules are secured for a plurality of processors, the main processor and the subprocessors, it is not necessary to change the configuration of the main processor even if a subprocessor is replaced or another subprocessor is added.

Thus, according to this embodiment, image data with relatively low processing load is processed by the main processor and image data with high processing load is processed by the subprocessor and the images generated by the respective processors are switched and output to the liquid crystal module and displayed, and therefore, for example, the output and display of a menu screen which is processing with light load is carried out by the main processor, while moving image processing which is processing with heavy load is carried out by the subprocessor and the moving image can be directly displayed on the liquid crystal module, and in this way, it is possible to easily add a new function with heavy processing load and reduce bus traffic of the main processor.

### (Embodiment 2)

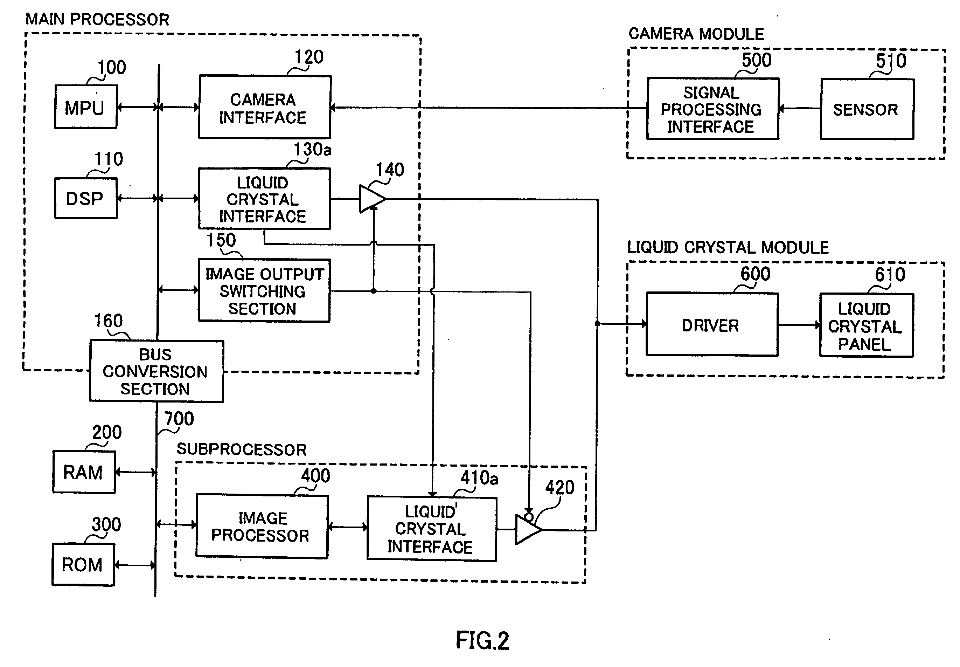

FIG.2 is a block diagram showing a configuration of an image processing apparatus according to Embodiment 2 of the present invention. In the image processing apparatus shown in the same figure, the same components as those of the image processing apparatus shown in FIG. 1 are assigned the same reference numerals and explanations thereof will be omitted.

A liquid crystal interface 130a outputs a synchronizing signal for displaying an image on a liquid crystal panel 610 and an image processed by a DSP 110 to a liquid crystal module. The liquid crystal interface 130a also outputs the synchronizing signal to a liquid crystal interface 410a of a subprocessor. The liquid crystal interface 410a outputs the synchronizing signal output from the liquid crystal interface 130a and an image processed by an image processor 400 to the liquid crystal module. ,

Then, the operation of the image processing apparatus in the above described configuration will be explained.

In this embodiment, as in the case of Embodiment 1, image data such as YUV data acquired by a sensor 510 is input to the DSP 110 or the image processor 400 through a signal processing interface 500 and a camera interface 120, subjected to image processing and a desired image such as an RGB image is generated.

As in the case of Embodiment 1, when image data is a still image or low resolution moving image, the image generated by the DSP 110 is output to the liquid crystal interface 130a. On the other hand, when the image data is a high resolution moving image, the image generated by the image processor 400 is output to the liquid crystal interface 410a. Then, anMPU 100 controls an image output switching section 150 and the image output switching section 150 controls a gate 140 and a gate 420, and the synchronizing signal and image generated by the DSP 110 or image processor 400 are output to a driver 600 of the liquid crystal module. At this time, as the synchronizing signals output from the liquid crystal interface 130a and liquid crystal interface 410a, the one output from the liquid crystal interface 130a is output as a synchronizing signal common to the two liquid crystal interfaces. Therefore, when images are switched and displayed on the liquid crystal panel 610, an image output at the timing of the same synchronizing signal is displayed. Examples of the synchronizing signal include pixel clock, Hsync (Horizontal Synchronizing signal) or Vsync (Vertical Synchronizing signal), etc.

Thus, according to this embodiment, when the output image from the main processor and the output image from the subprocessor are switched, they are switched without changing the synchronizing signal, and therefore it is possible to realize seamless image switching without producing any disturbance in the display.

### (Embodiment 3)

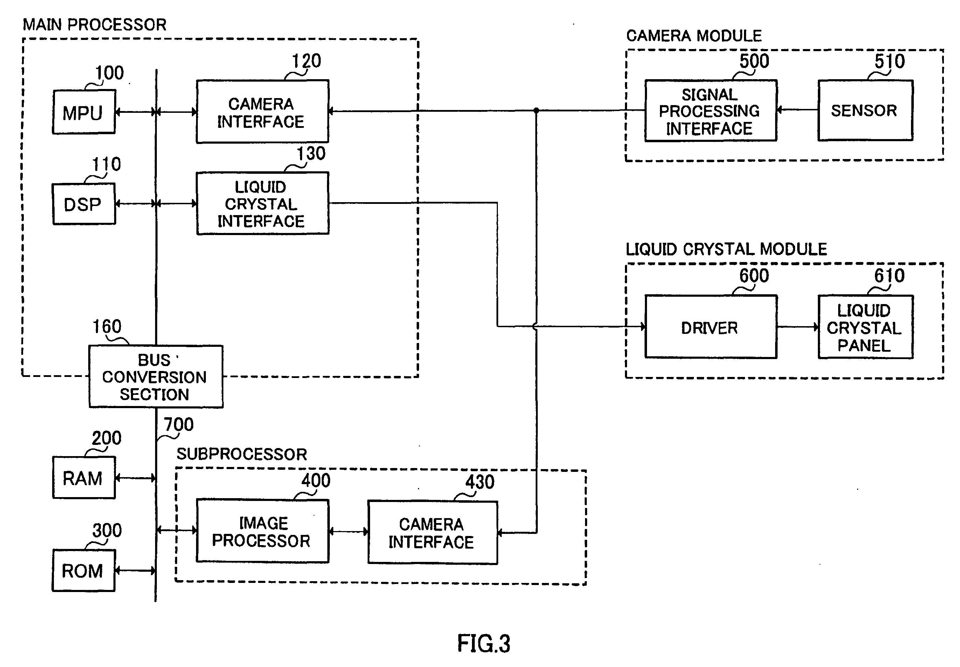

FIG.3 is a block diagram showing a configuration of an image processing apparatus according to Embodiment 3 of the present invention. In the image processing apparatus shown in the same figure, the same components as those of the image processing apparatus shown in FIG.1 are assigned the same reference numerals and explanations thereof will be omitted.

The image processing apparatus shown in FIG.3 differs from the image processing apparatus shown in FIG. 1 in that the gate 140, image output switching section 150 and gate 420 are removed and the liquid crystal interface 410 is replaced by a camera interface 430 and a signal processing interface 500 and the camera interface 430 are connected.

Then, the operation of the image processing apparatus in the above described configuration will be explained.

First, a sensor 510 acquires image data. This image data can be a still image or a moving image. When the image data is a still image or a low resolution moving image, the image data is output from the signal processing interface 500 to a camera interface 120, processed by a DSP 110 and a desired image is generated. When the image data is a high resolution moving image, the image data is output from the signal processing interface 500 to the camera interface 430, processed by the image processor 400 and a desired image is generated. The image generated by the DSP 110 or image processor 400 is output to a liquid crystal interface 130 through a main bus 700 and a synchronizing signal and image are output from the liquid crystal interface 130 to the liquid crystal module and displayed on a liquid crystal panel 610.

In this embodiment, when the image data acquired by the sensor 510 requires a high-speed calculation such as high resolution moving image, the image processor 400 performs image processing. However, the image data is not output from the signal processing interface 500 to the image processor 400 through the camera interface 120 and main bus 700, but directly output from the signal processing interface 500 to the camera interface 430, and therefore the image data does not increase the traffic of the main bus 700.

Thus, according to this embodiment, of image data acquired, image data with relatively low processing load is processed by the main processor and image data with high processing load is directly output to the subprocessor and processed, and therefore it is possible to prevent the throughput of the main processor from reducing and add a high-degree image processing.

### (Embodiment 4)

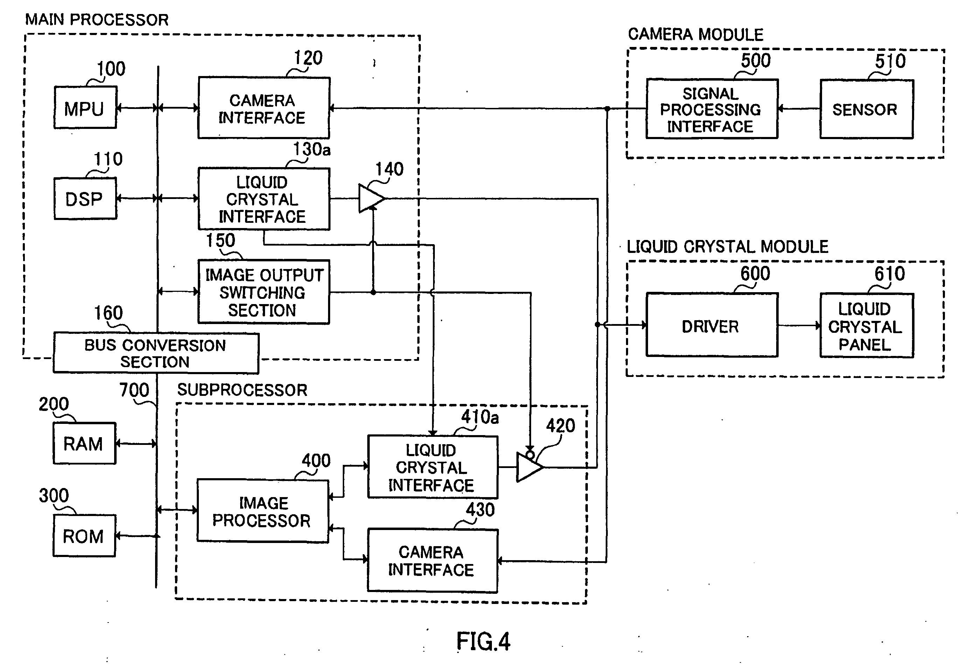

FIG.4 is a block diagram showing a configuration of an image processing apparatus according to Embodiment 4 of the present invention. The configuration of the image processing apparatus shown in the same figure is a configuration combining the image processing apparatuses shown in FIG.2 and FIG.3, and therefore explanations thereof will be omitted.

Then, the operation of the image processing apparatus in the above described configuration will be explained.

First, a sensor 510 acquires image data. This image data can be a still image or a moving image. When the image data is a still image or a low resolution moving image, the image data is output from a signal processing interface 500 to a camera interface 120, processed by a DSP 110 and a desired image is generated. On the other hand, when the image data is, for example, a high resolution moving image, the image data is output from the signal processing interface 500 to a camera interface 430, processed by an image processor 400 and a desired image is generated.

Then, as in the case of Embodiment 2, the image generated by the DSP 110 is output to a liquid crystal interface 130a and the image processed by the image processor 400 is output to a liquid crystal interface 410a. Then, anMPU 100 controls an image output switching section 150 and the image output switching section 150 controls a gate 140 and gate 420 and a synchronizing signal and the image generated by the DSP 110 or the image processor 400 are output to a driver 600 of a liquid crystal module. At this time, as the synchronizing signal output from the liquid crystal interface 130a and liquid crystal interface 410a, the one output from the liquid crystal interface 130a is output as the synchronizing signal common to the two liquid crystal interfaces. Therefore, when images are switched and displayed on a liquid crystal panel 610, the image output at the timing of the same synchronizing signal is displayed.

In this embodiment, encode processing of image data with relatively low resolution and decoding processing of an image with low resolution, etc., are carried out by a main processor, whereas, for example, a TV telephone function specified in the 3GPP, etc., which requires MPEG-4 encoding processing and decoding processing to be performed simultaneously in real time is processing with high processing load, and therefore image data is directly input from the camera module to the subprocessor, subjected to encoding processing, a bit stream created is output to the main processor, a compressed image is also input to the subprocessor through a main bus 700, subjected to decoding processing and the image generated is directly output to the liquid crystal module.

Thus, according to this embodiment, it is possible to perform processing such as simultaneous processing by an encoder and decoder such as a TV telephone with high processing load using the subprocessor and add a high image processing function without increasing processing load of the main processor.

### (Embodiment 5)

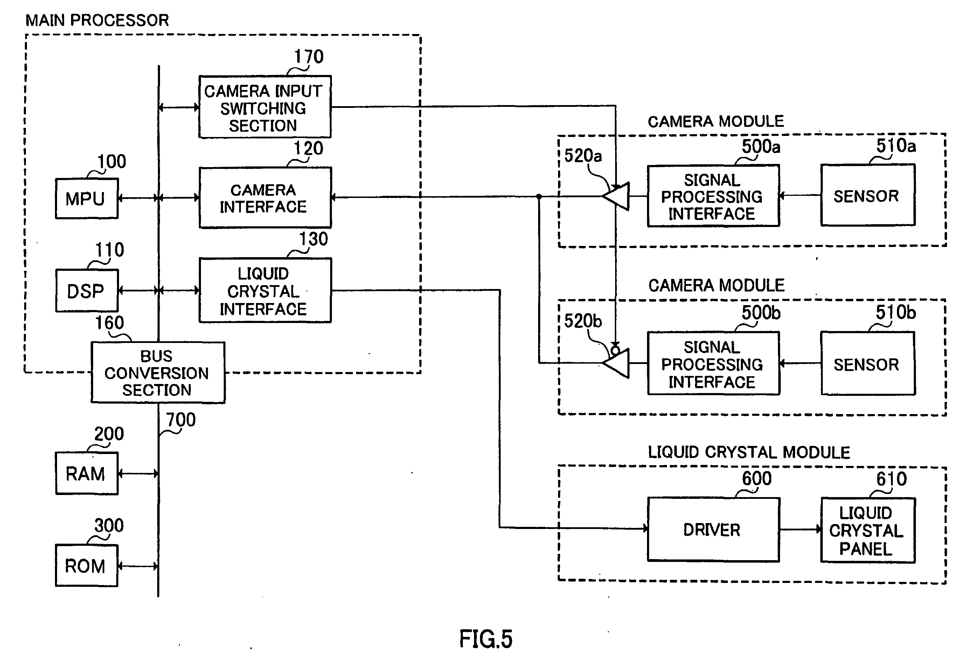

FIG.5 is a block diagram showing a configuration of an image processing apparatus according to Embodiment 5 of the present invention. In the image processing apparatus shown in the same figure, the same components as those of the image processing apparatus shown in FIG. 1 are assigned the same reference numerals and explanations thereof will be omitted.

A camera input switching section 170 controls a gate 520a and a gate 520b which will be described later to switch between image data to be input to a camera interface 120. The gate 520a outputs an image from a signal processing interface 500a under the control of the camera input switching section 170. The gate 520b outputs the image from a signal processing interface 500b under the control of the camera input switching section 170. Here, the output image data of the signal processing interface 500a and the output image data of the signal processing interface 500b are wired-ORed and input to a main processor. The image data wired-ORed and input to the main processor is switched by the camera input switching section 170. A tri-state buffer is connected to the outputs of camera modules to allow a wired-OR connection. The camera input switching section 170 outputs a signal to turn ON/OFF the output of the tri-state buffer to thereby switch between image data from the two camera modules.

Then, the operation of the image processing apparatus in the above described configuration will be explained.

First, a sensor 510a or a sensor 510b acquires image data. This image data can be a still image or a moving image. Then, the image data acquired is output to the corresponding signal processing interface 500a or signal processing interface 500b. Then, anMPU 100 controls the camera input switching section 170 and the camera input switching section 170 controls the gate 520a and gate 520b and the image data output to the signal processing interface 500a or signal processing interface 500b is output to the camera interface 120 of the main processor. Then, the image data is processed by a DSP 110 of the main processor and a desired image such as RGB (Red Green Blue) image, etc., is generated. The image generated is output to a driver 600 of a liquid crystal module through a liquid crystal interface 130. Then, a liquid crystal panel 610 is driven by the driver 600 and an image is displayed on the liquid crystal panel 610.

Thus, this embodiment provides, for example, a plurality of camera modules to pickup images in a plurality of directions, easily switches between image data acquired from the respective camera modules, and can thereby control inputs and further increase expandability.

This embodiment adopts a configuration with two camera modules, but the present invention can also switch between outputs from three or more camera modules.

### (Embodiment 6)

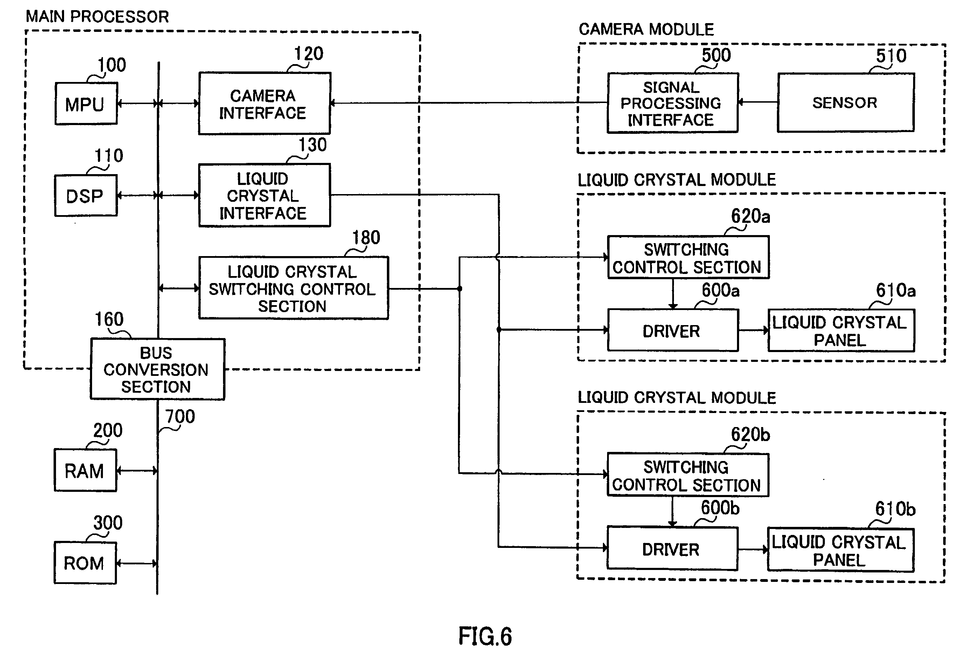

FIG.6 is a block diagram showing a configuration of an image processing apparatus according to Embodiment 6 of the present invention. In the image processing apparatus shown in the same figure, the same components as those of the image processing apparatus shown in FIG.1 are assigned the same reference numerals and explanations thereof will be omitted.

A liquid crystal switching control section 180 controls a switching control section 620a and a switching control section 620b which will be described later to switch between images to be input to a driver 600a and a driver 600b. The switching control section 620a turns ON/OFF the driver 600a under the control of the liquid crystal switching control section 180. The switching control section 620b turns ON/OFF the driver 600b under the control of the liquid crystal switching control section 180. VRAMs (Video Random Access Memory) (not shown) are mounted on two liquid crystal modules and can store images output from a liquid crystal interface 130.

Then, the operation of the image processing apparatus in the above described configuration will be explained.

First, a sensor 510 acquires image data. This image data can be a still image or a moving image. Then, the image data acquired is output to a camera interface 120 of a main processor through a signal processing interface 500. Then, the image data is processed by a DSP 110 of the main processor and a desired image such as RGB (Red Green Blue) image, etc., is generated. The image generated by the DSP 110 is output to the liquid crystal interface 130.

Then, the liquid crystal switching control section 180 controls the switching control section 620a and switching control section 620b and any one of the two liquid crystal modules is enabled (that is, put in a operating state) and the other is disabled (that is, put in a non-operating state). Then, the liquid crystal interface 130 outputs the image to the driver 600a or driver 600b of the enabled liquid crystal module. The output image is displayed on the corresponding liquid crystal panel 610a or liquid crystal panel 610b.

Thus, according to this embodiment, when, for example, two screens of a main liquid crystal module and a sub liquid crystal module are mounted, one liquid crystal switching control section can select a screen on which an image is displayed and thereby increase expandability. Furthermore, by applying the image processing apparatus of this embodiment to, for example, a folding type cellular phone, it is possible to easily realize colorization and a large screen for a sub liquid crystal module implemented by an interface of serial control, etc.

This embodiment adopts a configuration provided with two liquid crystal modules, but the present invention can also switch between outputs to three or more liquid crystal modules.

### (Embodiment 7)

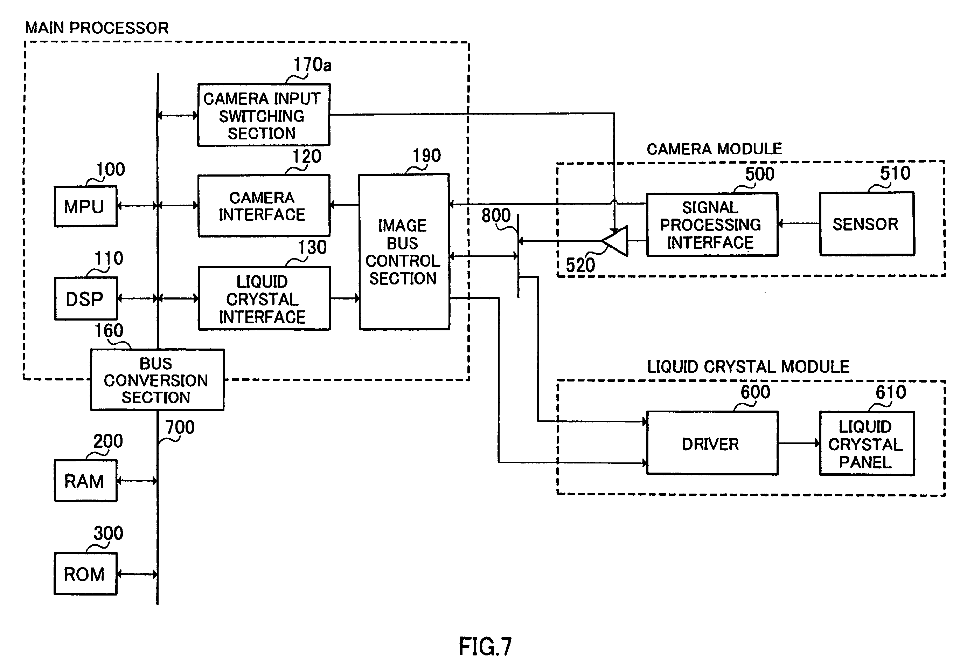

FIG.7 is a block diagram showing a configuration of an image processing apparatus according to Embodiment 7 of the present invention. In the image processing apparatus shown in the same figure, the same components as those of the image processing apparatus shown in FIG.1 are assigned the same reference numerals and explanations thereof will be omitted.

A camera input switching section 170a controls a gate 520 which will be described later to turn ON/OFF the output of image data to an image bus 800 which will be described later. An image bus control section 190 converts image data such as YUV data output from a signal processing interface 500 to an RGB image, etc. Furthermore, the image bus control section 190 converts an output bit width of the image data output from the signal processing interface 500 to an input bit width of the RGB image. The gate 520 turns ON/OFF the output of the image data from the signal processing interface 500 to the image bus 800 under the control of the camera input switching section 170a.

Then, the operation of the image processing apparatus in the above described configuration will be explained.

First, a sensor 510 acquires image data. This image data can be a still image or a moving image. When the acquired image data is previewed on a liquid crystal panel 610, the camera input switching section 170a controls the gate 520 and the image data is input to the image bus control section 190 through the image bus 800. Then, the YUV data acquired by the camera module is converted to an RGB image and input to the driver 600 of the liquid crystal module again through the image bus 800 and displayed on the liquid crystal panel 610. Here, when the camera module is constructed so as to output the RGB data, the RGB data output from the signal processing interface 500 may also be output to the driver 600 through the image bus 800.

Except in the case of a preview operation, image data is output to a camera interface 120 through the signal processing interface 500 and image bus control section 190. Then, the image data is processed by a DSP 110 of a main processor and a desired image such as an RGB (Red Green Blue) image is created. The image generated by the DSP 110 is output to a liquid crystal interface 130 and output to and displayed on the liquid crystal panel 610 through the image bus control section 190 and driver 600.

According to a conventional image display operation, image data from the camera module is passed through the main bus 700 through the camera interface 120 and stored in a large volume RAM 200. Then, it is output from the liquid crystal interface 130 to the liquid crystal module and the image data is previewed. This embodiment provides the image bus control section 190 and image bus 800 for a preview display, and therefore traffic of the main bus 700 is not increased by the preview image data. This prevents throughput of an MPU 100 from reducing due to an expansion of traffic.

Thus, according to this embodiment, it is possible to reduce the number of terminals which tends to increase due to an expansion of the bus width and incorporation of various peripheral interfaces in the main processor which is generally integrated on a single chip. Furthermore, since image data acquired by the camera module is directly displayed on the liquid crystal panel, it is possible to prevent traffic by the image data from increasing.

### (Embodiment 8)

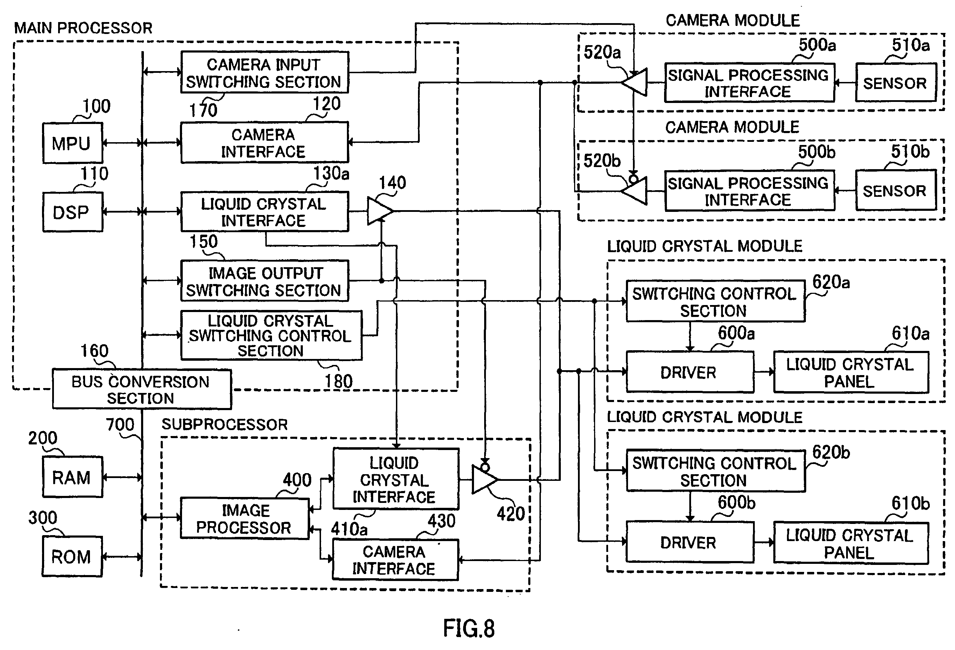

FIG.8 is a block diagram showing a configuration of an image processing apparatus according to Embodiment 8 of the present invention. The configuration of the image processing apparatus shown in the same figure is a configuration combining the image processing apparatuses shown in FIG.4, FIG.5 and FIG. 6 and therefore explanations thereof will be omitted.

Then, the operation of the image processing apparatus in the above described configuration will be explained.

First, a sensor 510a or sensor 510b acquires image data. This image data can be a still image or a moving image. Then, the acquired image data is output to the corresponding signal processing interface 500a or signal processing interface 500b. Then, an MPU 100 controls a camera input switching section 170 and the camera input switching section 170 controls a gate 520a and a gate 520b and image data output to the signal processing interface 500a or signal processing interface 500b is thereby output to a camera interface 120 of amainprocessor or a camera interface 430 of a subprocessor. Here, when the image data is, for example, a still image or a low resolution moving image, the image data is output from the signal processing interface 500a or signal processing interface 500b to the camera interface 120 and when the image data is, for example, a high resolution moving image, the image data is output from the signal processing interface 500a or signal processing interface 500b to the camera interface 430.

The image data output to the camera interface 120 is processed by a DSP 110 and a desired image is created and output to a liquid crystal interface 130a. The image data output to the camera interface 430 is processed by an image processor 400 and a desired image is created and output to a liquid crystal interface 410a

Then, a liquid crystal switching control section 180 controls a switching control section 620a and a switching control section 620b and any one of the two liquid crystal modules is enabled (that is, put in an operating state) and the other is disabled (that is, put in a non-operating state). Then, the liquid crystal interface 130a outputs the image to a driver 600a or a driver 600b of the enabled liquid crystal module. The output image is displayed on the corresponding liquid crystal panel 610a or liquid crystal panel 610b.

Furthermore, at this time, a synchronizing signal is output from the liquid crystal interface 130a to the liquid crystal interface 410a, and therefore the main processor and the liquid crystal interface of the subprocessor use a common synchronizing signal and no disturbance occurs in the display even when the images output are switched by an image output switching section 150.

Thus, according to this embodiment, it is possible to reduce processing load by the subprocessor carrying out processing with heavy load, etc., and realize connections to a plurality of camera modules and liquid crystal modules without increasing the number of terminals.

The above described embodiments can be combined with each other. That is, for example, the preview display by the image bus in Embodiment 7 can be combined with Embodiment 8.

As described above, the present invention can suppress data traffic from increasing and expand the functions without changing existing peripheral devices.

This application is based on the Japanese Patent Application No. 2002-123768 filed on April 25, 2002 and the Japanese Patent Application No. 2003-118046 filed on April 23, 2003, entire content of which is expressly incorporated by reference herein.

### Industrial Applicability

The present invention is applicable to an image processing apparatus. Furthermore, the present invention is applicable to an image display device such as a liquid crystal panel and a communication terminal apparatus having an image pickup apparatus such as a camera.

## Claims

1. An image processing apparatus comprising:
a first processing section that generates and processes a display image using image data;
a second processing section that generates and processes a display image different from that of said first processing section using image data; and
a switching section that switches between processing results obtained by said first processing section and said second processing section and outputs the processing result.

2. The image processing apparatus according to claim 1, wherein said switching section comprising:
a first gate that outputs the processing result of said first processing section;
a second gate that outputs the processing result of said second processing section; and
an image output switching section that switches between said first gate and said second gate and operates the gate.

3. The image processing apparatus according to claim 1, wherein said first processing section outputs a synchronizing signal for displaying the processing result to said second processing section, and
said second processing section outputs the processing result based on the synchronizing signal.

4. The image processing apparatus according to claim 1, wherein said first processing section generates and processes a display image with processing load smaller than a predetermined value, while said second processing section generates and processes a display image with processing load greater than the predetermined value.

5. The image processing apparatus according to claim 1, wherein said first processing section generates and processes a still image, while said second processing section generates and processes a moving image.

6. The image processing apparatus according to claim 1, further comprising an acquiring section that acquires image data corresponding to the still image and moving image, wherein said first processing section generates and processes the display image using the image data corresponding to the still image acquired by said acquiring section, and
said second processing section generates and processes the display image using the image data corresponding to the moving image acquired by said acquiring section.

7. A communication terminal apparatus comprising the image processing apparatus according to any one of claims 1 to 6.
